# EUROPEAN PATENT SPECIFICATION

(11) **EP 4 328 556 B1**
(45) Date of publication and mention of the grant of the patent: **26.02.2025**
(21) Application number: 22835543.4
(22) Date of filing: 26.09.2022
(51) Int. Cl.: G01K 1/14, H02J 7/00, H01R 13/639, H01R 13/621, G01K 1/024

(54) **HIGH-STABILITY BLUETOOTH TEMPERATURE MEASUREMENT PROBE**
BLUETOOTH-TEMPERATURMESSSONDE MIT HOHER STABILITÄT
SONDE DE MESURE DE TEMPÉRATURE BLUETOOTH À HAUTE STABILITÉ

(30) Priority: 15.06.2022 CN 202210675166; 18.07.2022 CN 202221852991 U
(43) Date of publication of application: 28.02.2024
(73) Proprietor: SHENZHEN KUKI ELECTRONIC CO., LTD., Shenzhen, Guangdong 518100 (CN)
(72) Inventor: ZHU, Rongyuan, Shenzhen, Guangdong 518100 (CN); QU, Guo, Shenzhen, Guangdong 518100 (CN); QIU, Hengshou, Shenzhen, Guangdong 518100 (CN); YU, Jianhua, Shenzhen, Guangdong 518100 (CN)
(74) Representative: Dr. Gassner & Partner mbB
(86) International application number: PCT/CN2022/121403
(87) International publication number: WO 2023/240834

(56) References cited:
- CN-A- 103 712 706
- CN-A- 112 525 366
- CN-A- 114 878 011
- CN-U- 213 780 780
- CN-U- 213 902 686
- CN-U- 213 902 686
- CN-U- 215 524 878
- CN-U- 217 442 708
- US-A1- 2014 202 244

## Description

### TECHNICAL FIELD

The present application relates to the technical field of temperature measuring device, and particularly to a Bluetooth temperature measuring probe with improved mounting stability of the temperature measuring probe.

### BACKGROUND ART

During food processing and cooking, for example, when grilling and heating materials, especially some thicker materials, it is difficult for a person to know whether the whole of the materials are completely baked through observation.

Currently, a temperature measuring probe is usually pierced into the materials to measure the temperature inside the materials, so as to conveniently determine whether the materials are thoroughly baked. US patent publication no. US10024736B2 published on July 17, 2018 discloses a high stability Bluetooth temperature measuring probe, in particular a thermometer for measuring temperature of heated foods. The thermometer includes a first portion configured to be positioned in the food, a second portion connected to the first portion, and a third portion connected to the second portion. The thermometer further includes an outer shell that extends from the second portion to the third portion, in which the outer shell includes a metallic portion and a non-metallic portion, and a thermal sensor is located in the metallic portion to measure a temperature inside the food. The thermometer further includes an inner shell inside the outer shell, which extends from the metallic portion into the non-metallic portion such that the inner shell in the non-metallic portion serves as at least a part of an antenna. The presence of the non-metallic portion can prevent the antenna from being completely shielded and, in turn, failing to transmit a signal to the outside.

In existing technical solutions, generally, a non-metallic portion is connected to a metal portion of an outer shell by close fitting and insertion. However, in actual working conditions, such close fitting members are difficult to be precisely produced and controlled in terms of fit tolerance, leading to poor fit stability and easy disengagement of the metallic portion from the non-metallic portion during a long-term use,

The patent application of CN213902686U discloses a toast and use wireless temperature probe relates to the temperature-detecting that food toasted, the temperature detection technical field that the meat toasted. The food temperature detection device is characterized by comprising a negative stainless steel pipe and a high-temperature-resistant handle which are connected through threads, wherein a negative temperature coefficient thermistor for detecting the temperature of food is embedded in the top of the negative stainless steel pipe, a control board is fixedly installed at the rear part of the negative stainless steel pipe, and the negative temperature coefficient thermistor for detecting the temperature of the food is connected with the control board through a welding lead; the rear end of the control plate is provided with a contact collision bead; the negative temperature coefficient thermistor and the spring-shaped radio frequency antenna which measure the environmental temperature are extended out of the pipe through the metal pin, the handle made of the high-temperature-resistant resin material is sleeved on the handle, the handle is screwed up and combined with the external thread of the metal pipe opening, the small tension screw is plugged into the opening at the other end of the high-temperature-resistant handle, the spring-shaped wireless tight combination is screwed up by the tightening nut, the nut can also be used as a charging cap, the problem of contact oxidation of devices after the handle is subjected to high temperature resistance is solved, and the assembly is easy to realize.

### SUMMARY

In order to solve the problem of poor connection stability between a metallic portion and a non-metallic portion of a temperature measuring probe shell in existing technologies, the present application provides a Bluetooth temperature measuring probe with improved an installation stability of a temperature measurement probe, adopting the following technology solution:

a Bluetooth temperature measuring probe with improved mounting stability of the temperature measuring probe, including a needle tube, a hollow mounting chamber, in which the needle tube has a head end and a tail end along a length direction thereof;
a handle configured to abut against the tail end of the needle tube;
a first thermal sensor configured for measuring temperature, in which the first thermal sensor is positioned in the mounting chamber of the needle tube close to the head end;
an antenna configured for transmitting signals, in which the antenna is mounted inside the needle tube and electrically connected to the first thermal sensor;
a locking assembly configured for connecting the handle to the needle tube, and locking the handle and the needle tube with each other;
the locking assembly includes a locking member, a locking nut and two limiting nuts, in which the two limiting nuts are connected to the antenna; the locking member is limited between the two limiting nuts; an inner wall of the needle tube is defined with a locking slot configured for snap-in of the locking member; the locking nut is connected to the antenna; and the locking nut cooperates with the two limiting nuts, such that the handle abuts against the tail end of the needle tube, so that a high stability mounting of th ehandle can be achieved.

In the above technical solution, the handle is abutting limited by and mounted on the needle tube by the locking assembly, so that a high stability mounting of the handle can be achieved. In conventional technical solutions, because the temperature signals need to be transmitted by a Bluetooth module to external mobile smart terminals through the antenna to conveniently measure the temperature, the handle of the temperature measuring probe is made of ceramic material with high temperature resistance and poor shielding efficiency. However, it is difficult for a brittle ceramic handle to be machined with a fine thread to cooperate with needle tube, and the brittle ceramic handle is liable to break. Therefore, a way of close fitting and insertion between the handle and the needle tube is adopted usually. However, because the handle is of ceramic material, it is difficult to precisely produce the handle, and it is easy for the handle to suffer from a large fit tolerance, resulting in poor fit stability and easy disengagement of the handle from the needle tube during a long-term use. In the technical solution of the present application, by means of clamping the locking member via the limiting nuts, the locking member is indirectly connected to the antenna, and the locking nut is inserted into the handle and is in thread connection with the antenna. When the limiting nut is snapped into the locking slot, the antenna is tightened, so that the handle abuts against the tail end of the needle tube by the locking nut, and further the handle can be mounted to the needle tube with a high stability, and is not likely to be detached.

Alternatively, the Bluetooth temperature measuring probe with improved an installation stability of a temperature measurement probe also includes a PCB control board positioned in the mounting chamber and a second thermal sensor configured for measuring an environment temperature; in which the head end of the needle tube is configured to be placed inside an object to be measured and conducted heat; the first thermal sensor is configured to measure a temperature of the head end of the needle tube; the first thermal sensor and the second thermal sensor are both electrically connected to the PCB control board; a pin is connected between the second thermal sensor and the PCB control board; the antenna has an accommodating space for accommodating the second thermal sensor and the pin.

By adopting the above technical solution, a temperature of a material to be measured is measured by the first thermal sensor; an environment temperature is measured by the second thermal sensor; and the first thermal sensor and the second thermal sensor are both electrically connected to the PCB control board, so as to transmit a temperature signal through the antenna. The handle is locked with the needle tube by the locking assembly to ensure the connection stability; and the second thermal sensor and pin are accommodated in the accommodating space. In the existing technical solution, because the non-metallic handle is generally made of brittle ceramic material, it is difficult to machine fine thread to cooperate with the thread of the needle tube. Therefore, a way of close fitting and insertion between the handle and the needle tube is adopted usually, however, such close fitting member is difficult to be precisely produced to control the fit tolerance, resulting in poor fit stability. So the handle is easily to be detached from the needle tube during a long using process. In the technical solution of the present application, the handle is locked with the needle tube by the locking assembly, a connection stability between the handle and the needle tube can be ensured, and the problem of easy detaching between the handle and the needle tube can be effectively solved.

Alternatively, the accommodating space includes an accommodating slot for accommodating the second thermal sensor and a through slot configured for allowing the pin to pass through; the antenna is formed with a first external thread at a middle part thereof; the through slot is configured to run through the first external thread; the accommodating slot is recessed in the antenna; and the pin is configured to pass through the through slot;
or, the accommodating space includes the accommodating slot for accommodating the second thermal sensor and the through slot configured for allowing the pin to pass through; the antenna is formed with the first external thread at a middle part thereof; there are two pins and two through slots; two through slots are formed on the surface of the first external thread at intervals; and two pins are positioned on the surface of the antenna and configured to run through the two through slots, respectively;
or, the accommodating space includes a mounting slot recessed in a circumferential sidewall of the antenna; the mounting slot is configured for accommodating the second thermal sensor and the pin; the mounting slot configured to run from one end of the antenna close to the PCB control board to one end of the antenna away from the PCB control board; the antenna is formed with the first external thread at a middle part thereof, and the mounting slot is configured to run through the first external thread;
or, the antenna is configured to be a hollow columnar structure; and the accommodating space is formed inside the antenna along a length direction thereof.

By adopting the above technical solution, on the one hand, the second thermal sensor is provided at one end of the antenna away from the head end of the needle tube to further ensure accuracy of the measured environment temperature, because the head end of the needle tube is configured to be inserted into a material to be measured to measure the temperature. On the other hand, the first external thread is penetrated by the through slot to facilitate the pin to pass, which not only can ensure the locking effect, but also effectively connect the second thermal sensor to the PCB control board.

In another embodiment, the second thermal sensor is positioned in the accommodating slot, and the pin passes through the through slot, thereby improving the mounting stability between the second thermal sensor and the pin. Moreover, the two through slots are positioned at opposite sides of the first external thread in a circumferential direction, the two pins pass through the two through slots, respectively, so that the two pins are away from each other, which can effectively prevent the two pins from contacting with each other.

In an embodiment, the antenna is recessed with a mounting slot for accommodating the second thermal sensor and the pins at the same time. The mounting slot is configured to run through the first external thread, and the pin is mounted into the mounting slot and pass through the first external thread, meanwhile, the limiting nut still can be in thread connection with the first external thread to achieve the locking function. In addition, the second thermal sensor and the pin are both mounted into the mounting slot, which has a better limiting function to the second thermal sensor and the pin, and can further ensure the mounting stability.

In another embodiment, the accommodating space is formed inside the antenna to accommodate the second thermal sensor and the pin, so as to effectively keep off the locking assembly outside the antenna, and effectively prevent the pin and the locking assembly from interfering with each other.

Alternatively, the locking slot is formed around an axis of the needle tube; the locking member has a C-shaped cross section, and is configured to be compressed by the inner wall of the needle tube and deformed elastically when the locking member is sliding into the mounting chamber along a length direction of the needle tube.

By adopting the above technical solution, the locking slot is formed around an axis of the needle tube, so the locking member can be conveniently inserted into the locking slot. In some other embodiments, the locking slot is not an annular structure, so the locking member may rotate relative to the antenna when the locking member moves with the antenna, such that the locking member is difficult to be accurately snapped into the locking slot, resulting in a failed locking. In an embodiment of the present application, the locking slot is formed around an axis of the needle tube to improve the convenience for clamping of the locking member and the fault tolerant ability of the clamping fitting between the locking member and the locking slot.

Alternatively, the locking member has a first sliding portion close to the head end of the needle tube, a second sliding portion close to the tail end of the needle tube and a guiding portion for connecting the first sliding portion to the second sliding portion; the guiding portion has a cross-sectional area gradually decreased from one end thereof close to the second sliding portion to one end thereof close to the first sliding portion; the first sliding portion has an external diameter less than an internal diameter of the mounting chamber; and the second sliding portion has an external diameter greater than an external diameter of the mounting chamber.

By adopting the above technical solution, the provided guiding portion plays a role of guiding the locking member during inserting the antenna into the mounting chamber, thereby gradually compressing the locking member. As the first sliding portion has an external diameter less than the internal diameter of the mounting chamber, when the antenna is inserted into the head end of the needle tube, one end of the guiding portion close to the head end of the needle tube is able to be inserted into the mounting chamber, then the guiding portion is slid relative to the inner wall of the mounting chamber, so that the locking member is gradually compressed and deformed to facilitate inserting the locking member into the needle tube, which improves the convenience for compressing and inserting the locking member into the needle tube.

Alternatively, the handle includes a holding part and an inserting part configured to be inserted into the mounting chamber; the holding part has an abutting surface connected to the inserting part and configured to abut against the tail end of the needle tube when the inserting part is inserted into the mounting chamber.

By adopting the above technical solution, the external diameter of the holding part is same as that of the needle tube, so that the connection portion between the handle and the needle tube is smooth. By means of the inserting part, the handle is able to be preliminarily inserted into the needle tube, and the external diameter of the holding part is aligned with that of the needle tube, so that the abutting surface can be aligned with the tail end of the needle tube with a smooth connection portion, improving the smoothness of the overall appearance.

Alternatively, an outer wall of the limiting abuts against an inner wall of the mounting chamber; an injection chamber is formed between the limiting nut close to the tail end and the tail end; and the inserting part is configured to be inserted into the injection chamber.

By adopting the above technical solution, the outer wall of the limiting nut abuts against the inner wall of the mounting chamber, which can prevent the glue from permeating into the head end of the needle tube. In actual production conditions, the antenna with the limiting nut and the locking member is inserted into the mounting chamber to make the locking member be snapped into the locking slot. Then, the glue needs to be injected into the mounting chamber from the tail end of the needle tube. The handle is inserted into the mounting chamber, and the locking nut is inserted into the handle to be tightened to the antenna, so that the handle is abutted against the needle tube. By making the outer wall of the limiting nut abut against the inner wall of the mounting chamber, on the one hand, the glue may be prevented from permeating into the head end of the needle tube to affect other components, on the other hand, the glue can backflow to the tail end of the needle tube after the handle is inserted into the mounting chamber, so as to fill the gap between the handle and the inner wall of the needle tube, further improving the connecting stability between the handle and the needle tube, and the sealing performance.

Alternatively, the Bluetooth temperature measuring probe with improved an installation stability of a temperature measurement probe further includes an elastic tab and a PCB control board, in which the PCB control board is configured for electrically connecting the antenna to the first thermal sensor; there are two elastic tabs provided at an upper side and a lower side of the PCB control board, respectively; and the two elastic tabs are configured to abut against the inner wall of the needle tube when being compressed.

By adopting the above technical solution, two elastic tabs are provided on two surfaces of the PCB control board, therefore the PCB control board is supported at central part of the hollow cavity by the two elastic tabs. Therefore, the two elastic tabs play a supporting role to the PCB control board, and can effectively reduce the contact between the PCB control board and the needle tube, and reduce the possibility of PCB control board being seriously damaged due to severe heating through heat conduction of the needle tube during measuring temperature, meanwhile play a protecting role to the PCB control board.

Alternatively, the PCB control board is electrically connected to a power supply module; a positive electrode of the power supply module is electrically connected to the antenna; the PCB control board is electrically connected to the elastic tab; a negative electrode of the power supply module is electrically connected to the needle tube through the PCB control board and the elastic tab in turn; the locking nut is configured to electrically connect the positive electrode of the power supply module to an external power supply; and the needle tube is configured to electrically connect the negative electrode of the power supply module to the external power supply.

By adopting the above technical solution, by providing a power supply module with charging and discharging function, the negative electrode of the power supply module is electrically connected to that of the external power supply by the needle tube, and the positive electrode of the power supply module is electrically connected to that of the external power supply by the locking nut, so that it can adapt to a special charging box without an additional charging structure and connecting wire. Taking advantage of the metal conductivities of the antenna and the needle tube, the temperature measuring probe can be charged conveniently and quickly.

Alternatively, a supporting nut is in thread connection with one end of the antenna close to the PCB control board; a periphery of the supporting nut abut against an inner wall of the needle tube; and the limiting nut and the supporting nut are both made of a ceramic material.

By adopting the above technical solution, by providing a supporting nut, one end of the antenna close to the PCB control board is supported, so that the supporting nut has a supporting effect to the antenna, ensures the mounting stability of the antenna, and effectively prevent the antenna from touching the needle tube to cause a short circuit during charging.

In summary, the present application achieves at least the following beneficial technical effects:
1. the handle is abutted against, limited and mounted on the needle tube by the locking assembly, so that a high stability mounting of the handle can be achieved. In the existing technical solution, because the temperature signals need to be transmitted by a Bluetooth module to external mobile smart terminals through the antenna to conveniently measure the temperature, the handle of the temperature measuring probe is made of ceramic material with high temperature resistance and poor shielding efficiency. However, it is difficult for brittle ceramic handle to be machined into a fine thread to cooperate with needle tube, and the brittle ceramic handle is liable to break. Therefore, a way of close fitting and insertion between the handle and the needle tube is adopted usually. However, because the handle is ceramic material, it is difficult to precisely control the production, and it is easy to generate a large fit tolerance, resulting in poor fit stability, then the handle tends to be detached from the needle tube during a long using process. In the technical solution of the present application, the locking member is indirectly connected to the antenna by clamping the limiting nut with locking member, the locking nut is inserted into the handle and is thread connection with the antenna. When the limiting nut is snapped into the locking slot, the antenna is tightened, so that the handle is abutted against the tail end of the needle tube by the locking nut, and further the handle can be mounted to the needle tube with a high stability, and is not likely to be detached;
2. on the one hand, the second thermal sensor is provided at one end of the antenna away from the head end of the needle tube to further ensure accuracy of the measured environment temperature, because the head end of the needle tube is configured to be inserted into a material to be measured to measure the temperature. On the other hand, the first external thread is penetrated by the through slot to facilitate the pin to pass, which not only can ensure the locking effect, but also effectively connect the second thermal sensor to the PCB control board;
3. the outer wall of the limiting nut abuts against the inner wall of the mounting chamber, which can prevent the glue from permeating into the head end of the needle tube. In actual production conditions, the antenna with the limiting nut and the locking member is inserted into the mounting chamber to make the locking member be snapped into the locking slot. Then, the glue needs to be injected into the mounting chamber from the tail end of the needle tube. The handle is inserted into the mounting chamber, and the locking nut is inserted into the handle to be tightened to the antenna, so that the handle is abutted against the needle tube. By making the outer wall of the limiting nut abut against the inner wall of the mounting chamber, on the one hand, the glue may be prevented from permeating into the head end of the needle tube to affect other components, on the other hand, the glue can backflow to the tail end of the needle tube after the handle is inserted into the mounting chamber, so as to fill the gap between the handle and the inner wall of the needle tube, further improving the connecting stability between the handle and the needle tube, and the sealing performance.

### BRIEF DESCRIPTION OF THE DRAWINGS

FIG. 1. is a section view of the overall structure with a second thermal sensor hidden according to an embodiment of the present application;
FIG. 2 is an enlarged diagram of A for illustrating a clamping structure between a locking member and a locking slot according to an embodiment of the present application;
FIG. 3 is a section view of the overall structure according to embodiment 1 of the present application;
FIG. 4 is an overall structure schematic diagram with the handle and the needle tube hidden according to embodiment 1 of the present application;
FIG. 5 is a structure schematic diagram for illustrating the accommodating space of the antenna according to embodiment 2 of the present application;
FIG. 6 is a structure schematic diagram for illustrating the accommodating space of the antenna according to embodiment 3 of the present application; and
FIG. 7 is a section view for illustrating the accommodating space of the antenna according to embodiment 4 of the present application.

### Descriptions of reference signs:

1. needle tube; 11. mounting chamber; 12. locking slot; 13. spike part; 14. injection chamber; 15. head end; 16. tail end;
2. handle; 21. holding part; 22. inserting part; 23. abutting surface; 24. wire-passing channel;
3. antenna; 31. first external thread; 32. second external thread; 33. third external thread; 34. first locating ring; 35. second locating ring; 36. supporting nut; 37. accommodating slot; 371. through slot; 372. mounting slot; 373. hollow cavity; 374. feed-passing slot; 375. wire-passing port;
4. first thermal sensor;
5. locking assembly; 51. locking member; 511. first sliding portion; 512. second sliding portion; 513. guiding portion; 52. locking nut; 53. limiting nut;
6. elastic tab; 7. PCB control board; 8. power supply module;
9. second thermal sensor; 91. pin.

### DETAILED DESCRIPTION

The present application is further described in detail below in combination with the drawings.

The embodiments of the present application disclose a Bluetooth temperature measuring probe with improved mounting stability of the temperature measuring probe.

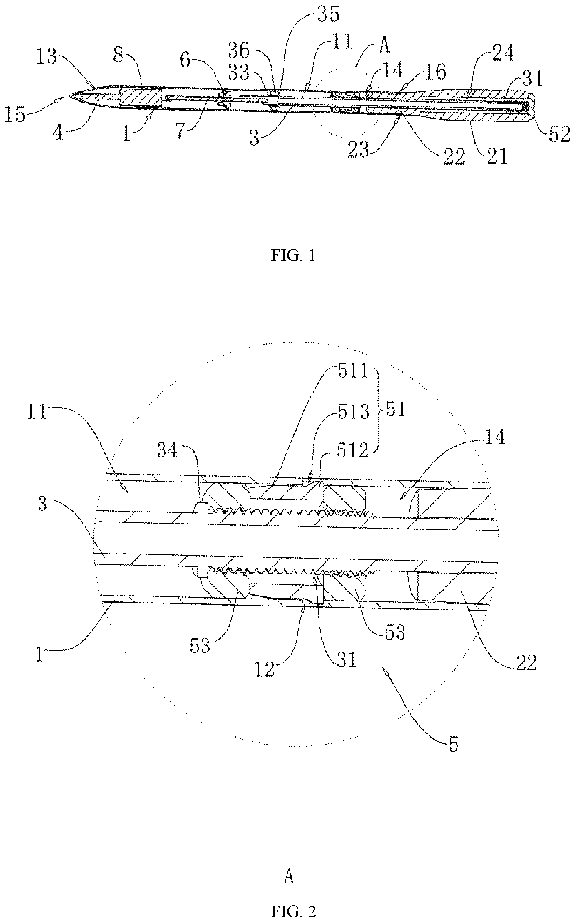

Referring to FIGS. 1-2, the Bluetooth temperature measuring probe with improved mounting stability of the temperature measuring probe includes a needle tube 1, a handle 2, a first thermal sensor 4, an antenna 3 and a locking assembly 5. The needle tube 1 has a head end 15 and a tail end 16 opposite arranged along the length direction thereof. A mounting chamber 11 is formed inside the needle tube 1. The first thermal sensor 4 is mounted inside the mounting chamber 11 close to the head end 15 of the needle tube 1, and the handle 2 is inserted into the mounting chamber 11 close to the tail end 16 of the needle tube 1 and abutted against the tail end of the needle tube 1. The antenna 3 is mounted inside a vacuum chamber and electrically connected to the first thermal sensor 4. The locking assembly 5 is connected to the handle 2 and the needle tube 1 to stably lock and mount the handle 2 on the needle tube 1 stably. The locking assembly 5 includes a locking member 51 having elasticity, a locking nut 52 and two limiting nuts 53, in which the two limiting nuts 53 is in thread connection with a central part of the antenna 3 to limit the locking member 51. The inner wall of the needle tube 1 is defined with a locking slot 12 corresponding to the locking member 51, and the locking nut 52 is in thread connection with the antenna 3 and abutted against one end of the handle 2 away from the needle tube 1. When the locking member 51 is snapped into the locking slot 12, the handle 2 is abutted against and limited at the tail end 16 of the needle tube 1 by the cooperation of the locking nut 52 and antenna 3, so that the handle 2 can be clamped between the locking nut 52 and the needle tube 1.

Referring to FIGS. 1-2, the needle tube 1 is a generally hollow cylindrical structure, and an opening of the mounting chamber 11 is positioned at the tail end 16 of the needle tube 1. The head end 15 of the needle tube 1 has a spike part 13 gradually narrowed along a direction away from the tail end 16 of the needle tube 1 to facilitate piercing into the materials to be measured.

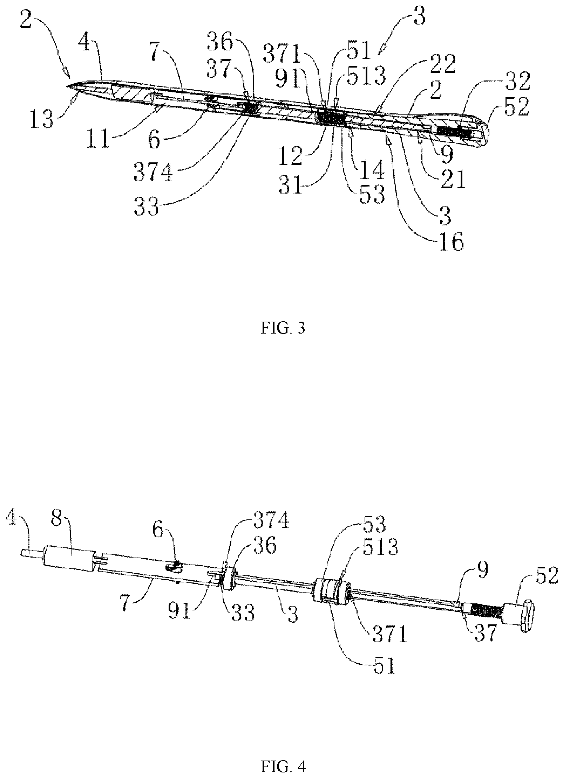

Referring FIGS.3-4, the handle 2 includes a holding part 21 and inserting part 22 for being inserted into the mounting chamber 11, and the handle 2 is formed with a wire-passing channel 24 configured to run through the handle 2 along the length of the needle tube 1. The inserting part 22 is generally cylindrical structure, and has a cross-sectional diameter adapted to that of the mounting chamber 11, so that the inserting part 22 can be inserted into the needle tube 1 from an opening of the mounting chamber 11 at the tail end 16 of the needle tube 1. A connection part between the holding part 21 and the inserting part 22 is configured to be a step structure, and the holding part 21 has an abutting surface 23 connected to the inserting part 22. When the inserting part 22 is totally inserted into the mounting chamber 11, the abutting surface 23 is abutted against the tail end 16 of the needle tube 1. The abutting surface 23 has an external diameter same as that of the tail end 16 of the needle tube 1, so that the outer wall of the handle 2 can align with the outer wall of a connection part of the needle tube 1.

Referring to FIGS. 3-4, the antenna 3 is made of metal material, and is used to transmit signal and has conductive function. The antenna 3 is formed with a first external thread 31 at a middle part thereof, and internal threads of the two limiting nuts 53 are cooperated with the first external thread 31. The locking member 51 is limited between the two limiting nuts 53, so that when the antenna 3 is mounted into the mounting chamber 11, the locking member 51 can slide into the mounting chamber 11 with movement of the antenna 3. It is worth noting that, the limiting nuts 53 does not clamp the locking member 51, which only plays a limiting role to the locking member 51 along the length direction of the antenna 3, and the locking member 51 can produce elastic deformation, so that it has a relative motion with the limiting nuts 53 in a radial direction of the antenna 3. A first locating ring 34 is formed on the antenna 3 at one side of the first external thread 31 close to the head end 15 of the needle tube 1, and the first locating ring 34 is circumferentially protruded from the antenna 3, and has an external diameter greater than the internal diameter of the limiting nut 53. The limiting nut 53 close to the head end 15 of the needle tube 1 is abutted against the first locating ring 34 to locate the limiting nut 53 and the locking member 51.

Referring to FIGS. 3-4, the locking slot 12 is formed in the inner wall of the needle tube 1 around an axis of the needle tube 1, and the locking slot is configured to be a ring structure. The locking member 51 is configured to be a C-shaped structure, which does not contact with the antenna 3 and circles around the first external thread 31 of the antenna 3 and is an elastic snap ring made of copper. When the locking member 51 is sliding in the mounting chamber 11 along the length direction of the needle tube 1, the locking member 51 is configured to be compressed by the inner wall of the needle tube 1 and deformed elastically. Specifically, the locking member 51 has a first sliding portion 511 close to the head end 15 of the needle tube 1, a second sliding portion 512 close to the tail end 16 of the needle tube 1 and a guiding portion 513 for connecting the first sliding portion 511 to the second sliding portion 512, and the guiding portion 513 is gradually narrow along a direction from the second sliding portion 512 to the first sliding portion 511. Specifically, the guiding portion 513 has a cross-sectional area gradually decreased from one end thereof close to the second sliding portion to one end thereof close to the first sliding portion. In some embodiments of the present application, the locking member 51 has a normal state not pressed by an external force and a compressed state pressed into the mounting chamber 11 by an external force. In the normal state, the first sliding portion 511 has an external diameter less than the internal diameter of the mounting chamber 11, and the second sliding portion 512 has an external diameter greater than the internal diameter of the mounting chamber 11, so that when the antenna 3 is inserted from the opening of the mounting chamber 11 to the head end 15 of the needle tube 1, the first sliding portion 511 is able to be inserted into the mounting chamber 11 and the guiding portion 513 can play a role of guiding, so that the locking member 51 can be compressed gradually and slide into the mounting chamber 11. After the second sliding portion 512 of the locking member 51 slide into the locking slot 12, the locking member 51 is expanded and snapped into the locking slot 12 to achieve the limitation to the antenna 3. It is worth noting that, in some embodiments of the present application, when the locking member 51 is snapped into the locking slot 12, the internal diameters of the first sliding portion 511 and the second sliding portion 512 are both greater than the external diameter of the first external thread 31, so that the locking member 51 can be abutted against the inner wall of the needle tube 1 and not contract with the antenna 3 after being expanded.

Referring to FIGS. 3-4, the locking nut 52 is inserted from the holding part 21 of the handle 2 into the wire-passing channel 24, and is formed with an internal thread. Specifically, the locking nut 52 is abutted against an end surface of the holding part 21 away from the needle tube 1. A second external thread 32 is formed on the antenna 3 at one end thereof for cooperating with the locking nut 52, and the antenna 3 is configured to run through the wire-passing channel 24 of the handle 2 and is in thread connection with the locking nut 52. Therefore, when the locking member 51 is snapped into the locking slot 12, one end of the handle 2 is abutted against the needle tube 1 by the abutting surface 23, and the other end of the handle 2 is abutted against the locking nut 52, at this time, the antenna 3 between the locking member 51 and the locking nut 52 is tensioned, thereby providing a tensile force to the locking nut 52 towards the tail end 16 of the needle tube 1, so that the handle 2 can be locked and limited between the locking nut 52 and the needle tube 1.

Referring to FIGS. 3-4, the outer wall of the limiting nut 53 abuts against the inner wall of the mounting chamber 11, so that an injection chamber 14 is formed between the limiting nut 53 close to the tail end 16 of the needle tube 1 and the tail end 16 of the needle tube 1. Specifically, the opening of the mounting chamber 11 can be closed by the abutting surface 23 of the handle 2 after the inserting part 22 of the handle 2 is inserted. An injection chamber 14 is formed between the limiting nut 53 close to the tail end 16 of the needle tube 1, the inner wall of the mounting chamber 11 and the abutting surface 23 of the handle 2, and the inserting part 22 is inserted into the injection chamber 14. In some embodiments of the present application, before the handle 2 is inserted, the glue will be injected from the opening of the mounting chamber 11 to the direction of the limiting nut 53. After the inserting part 22 of the handle 2 is inserted, the glue will backflow to the direction of the tail end 16 of the needle tube 1 and fill a gap between the inserting part 22 and the inner wall of the needle tube 1, so that the handle 2 can be further connected to the needle tube 1 through glue, and a better sealing performance is achieved.

Referring to FIGS. 3-4, the temperature measuring probe also includes an elastic tab 6 and a PCB control board 7, in which the PCB control board 7 is connected to one end of the antenna 3 close to the head end 15 of the needle tube 1. There are two elastic tabs 6 symmetrically arranged on two board surfaces of the PCB control board 7, and the elastic tabs 6 are compressed and abutted against the PCB control board 7 and the inner wall of the needle tube 1, so as to support the PCB control board 7. In some embodiments of the present application, after the PCB control board 7 and the antenna 3 are connected with each other through point welding after inserting, which will not be repeated here. The PCB control board 7 is configured for electrically connecting the antenna 3 to the first thermal sensor 4. In some embodiments of the present application, the first thermal sensor 4 is positioned in the spike part 13 of the needle tube 1, and a temperature measuring head of the first thermal sensor 4 contacts with the inner wall of the spike part 13 to measure the temperature. Temperature measuring signals can be received by the PCB control board 7 and transformed to temperature signals that is transmitted to a mobile smart terminals through the antenna 3. Specifically, the handle 2 is made of ceramic material; the PCB control board 7 has a Bluetooth module thereon; and the antenna 3 is coupled with the Bluetooth module, so that the antenna 3 is able to transmit the temperature signals to outside.

Referring to FIGS. 3-4, the PCB control board 7 is also electrically connected with a power supply module 8 that is rechargeable and dischargeable, which is connected to the PCB control board 7 and the first thermal sensor 4 to supply power to them. A positive electrode of the power supply module 8 is electrically connected to the antenna 3; the PCB control board 7 is electrically connected to the elastic tab 6; so that a negative electrode of the power supply module 8 is electrically connected to the needle tube 1 through the elastic tab 6. The needle tube 1, the locking nut 52 and the elastic tab 6 are all made of conductive metal materials. In actual working conditions of the embodiments of the present application, the temperature measuring probe is able to cooperate with an external charging box, so that the locking nut 52 is electrically connect to the positive electrode of an external power supply, and the needle tube 1 is electrically connect to the negative electrode of the external power supply, and further the positive electrode of the power supply module 8 is electrically connect to that of the charging box, and the negative electrode of the power supply module 8 is electrically connect to that of the charging box to supply power to the power supply module 8.

Referring to FIGS. 3-4, in order to prevent the antenna 3 from contacting the inner wall of needle tube 1, a third external thread 33 is formed on the needle tube 1 at one end close to the PCB control board 7, and is in thread connection with a supporting nut 36. A peripheral of the supporting nut 36 abuts against the inner wall of the needle tube 1 to support the antenna 3 and prevent a short circuit during charging due to contact between the antenna 3 and the needle tube 1. A second locating ring 35 is formed on the third external thread 33 of the antenna 3 at one side thereof close to the tail end 16 of the needle tube 1, and is circumferentially protruded from the antenna 3. The second locating ring 35 has an external diameter greater than the internal diameter of the supporting nut 36, and the supporting nut 36 is abutted against the second locating ring 35 to locate the supporting nut 36. It is worth noting that, the supporting nut 36 and the supporting nut are both made of non-conductive ceramics.

Referring to FIGS. 3-4, in order to connecting the second thermal sensor 9 to the PCB control board 7, the accommodating space includes an accommodating slot 37 for accommodating the second thermal sensor 9 and a through slot 371 configured for allowing the pin 91 to pass through. The accommodating slot 37 is positioned at a circumferential sidewall of the antenna 3 away from the head end 15 of the needle tube 1, moreover, a through slot 371 is formed on the first external thread 31; a feed-passing slot 374 is formed on the third external thread 33; and the accommodating slot 37, the through slot 371, the feed-passing slot 374 are aligned in a length direction of the antenna 3. There are two pins 91 of the second thermal sensor 9; the second thermal sensor 9 is mounted in the accommodating slot 37; and the two pins 91 are provided on the surface of the antenna 3 in parallel and pass through the through slot 371 and the feed-passing slot 374 in turn, and then connected to the PCB control board 7. It is worth noting that, an angle occupied by the through slot 371 in the circumferential direction of the antenna 3 is less than 90 degrees, so that the first external thread 31 and the third external thread 33 that both formed with the through slot 371 still have good thread cooperating effect. Specifically, in some embodiments of the present application, the angle occupied by the opening of the through slot 371 in the circumferential direction of the antenna 3 is 30 degrees.

Referring to FIGS. 1-2, an implementation principle of the Bluetooth temperature measuring probe with improved mounting stability of the temperature measuring probe of the present application is that: the locking member 51 is indirectly connected to the antenna 3 by clamping the locking element 51 with the limiting nut 53, and the locking nut 52 is inserted into the handle 2 and in thread connection with the antenna 3. When the guiding portion 513 of the locking member 51 is snapped into the locking slot 12 in the needle tube 1, the locking nut 52 is able to be tighten to the second external thread 32 of the antenna 3, so that the antenna 3 between the locking member 51 and the locking nut 52 can be tighten, and the handle 2 abuts against the tail end 16 of the needle tube 1 by the locking nut 52, and further high stability mounting between the needle tube 1 and the handle 2 can be achieved. Moreover, the second thermal sensor 9 is provided on the antenna 3 away from the head end 15 of the needle tube 1, so that the pin 91 is positioned on the surface of the antenna 3 and extends to the PCB control board 7 through the through slot 371, and the PCB control board 7 can be electrically connected to the second thermal sensor 9.

### Embodiment 2

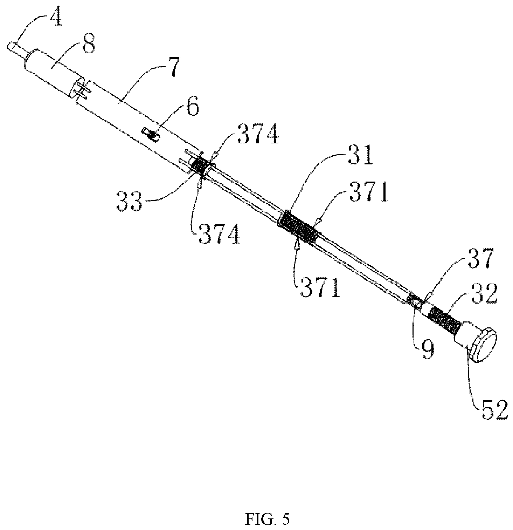

Referring to FIG.5, the difference of embodiment 2 from embodiment 1 lies in that the number of the through slot 371 is two, the through slot 371 is configured to run through the first external thread 31 along its circumferential direction, and the two through slots 371 are arranged at intervals. The number of the feed-passing slot 374 is two; each feed-passing slot 374 is aligned with the through slot 371 in the length direction of the antenna 3; the two pins 91 are positioned on the surface of the antenna 3 along the length direction of the antenna 3; and the pins 91 is configured to run through the through slot 371 and the feed-passing slot 374 from the second thermal sensor 9 to the PCB control board 7 correspondingly.

Referring to FIG.5, an implementation principle of the Bluetooth temperature measuring probe with improved mounting stability of the temperature measuring probe in embodiment 2 of the present application is that: two through slots 371 are formed on the first external thread 31 at intervals, and two feed-passing slots 374 are formed on the third external thread 33 correspondingly, so that the two pins 91 are positioned on the surface of the antenna 3 along the length direction of the antenna 3, and the two pins are configured to run through the through slots 371, respectively.

### Embodiment 3

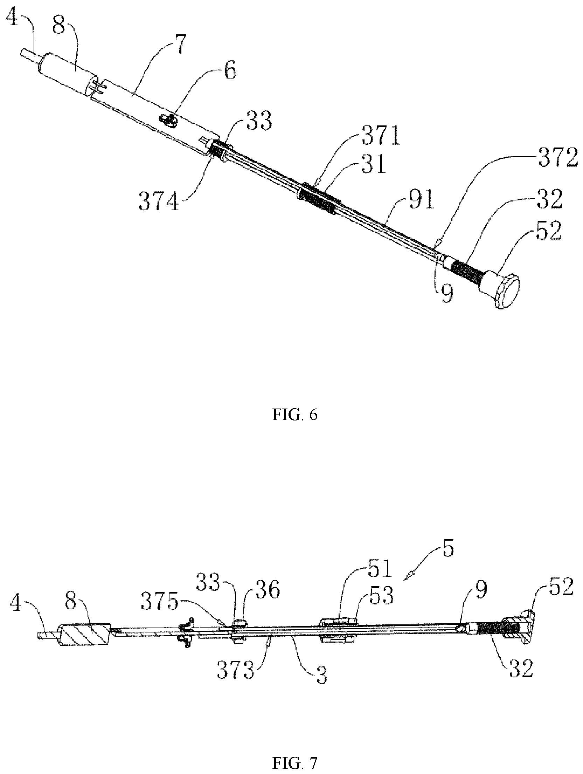

Referring to FIG.6, the difference of embodiment 3 from embodiment 1 lied in that the accommodating space is a mounting slot 372 configured for accommodating the second thermal sensor 9 and the pin 91. The mounting slot 372 is recessed in the circumferential sidewall of the antenna 3, and the mounting slot 372 has a length same as that of the antenna 3. Specifically, the mounting slot 372 extends from one end of the antenna 3 close to the PCB control board 7 to one end away from the head end 15 of the needle tube 1. The second thermal sensor 9 is mounted at one end of the mounting slot 372 away from the head end 15 of the needle tube 1. The mounting slot 372 is configured to run through the first external thread 31 and the third external thread 33, so that the mounting slot 372 is communicated with the through slots 371 and the feed-passing slot 374.

An implementation principle of the Bluetooth temperature measuring probe with improved mounting stability of the temperature measuring probe in embodiment 3 of the present application is that: the mounting slot 372 is recessed on the surface of the antenna 3 along the length direction thereof, and the second thermal sensor 9 and pins 91 are mounted on the mounting slot 372 at the same time.

### Embodiment 4

Referring to FIG.7, the difference of embodiment 4 from embodiment 1 lied in that, the antenna 3 is a hollow columnar structure, the antenna 3 has a hollow cavity 373. The accommodating space is the hollow cavity 373 in the inner of the antenna 3 in embodiment 4 of the present application, and the hollow cavity 373 is formed in the antenna 3 along the length direction thereof. The second thermal sensor 9 is positioned in the hollow cavity 373 and away from the head end 15 of the needle tube 1. One end of the pin 91 is connected to the second thermal sensor 9, and the other end extends to one end of the antenna 3 close to the PCB control board 7. A wire-passing port 375 is formed on an end surface of the antenna 3 close to the PCB control board 7, and the pin 91 extends out of the antenna 3 via the wire-passing port 375 and is electrically connected to the PCB control board 7.

An implementation principle of the Bluetooth temperature measuring probe with improved mounting stability of the temperature measuring probe in embodiment 4 of the present application is that: the antenna 3 is a hollow structure, so that the inner of the antenna 3 is taken as an accommodating space, the second thermal sensor 9 and the pins 91 are mounted inside the antenna 3 to play a role of allowing the mounting of the locking assembly 5.

The above are the preferred embodiments of the present application, which are not intended to limit the protection scope of the present application.

## Claims

1. A Bluetooth temperature measuring probe with improved mounting stability of the temperature measuring probe, **characterized by** comprising:
a needle tube (1) having a hollow mounting chamber (11), wherein the needle tube (1) has a head end (15) and a tail end (16) along a length direction thereof;
a handle (2) configured to abut against the tail end of the needle tube (1);
a first thermal sensor (4) configured for measuring temperature, wherein the first thermal sensor (4) is positioned in the mounting chamber (11) of the needle tube (1) close to the head end;
an antenna (3) configured for transmitting signals, wherein the antenna (3) is mounted inside the needle tube (1) and electrically connected to the first thermal sensor (4); and
a locking assembly (5) configured for connecting the handle (2)to the needle tube (1), and locking the handle (2) and the needle tube (1) with each other,
wherein the locking assembly (5) comprises a locking member (51), and a locking nut (52), wherein the locking nut (52) is connected to the antenna (3);
**characterised in that** the locking assembly (5) further comprises two limiting nuts (53); the two limiting nuts (53) are connected to the antenna (3); the locking member (51) is limited between the two limiting nuts (53); an inner wall of the needle tube (1) is defined with a locking slot (12) configured for snap-in of the locking member (51); and the locking nut (52) cooperates with the two limiting nuts (53), such that the handle (2) abuts against the tail end of the needle tube (1), so that a high stability mounting of the handle can be achieved.

2. The Bluetooth temperature measuring probe with improved mounting stability of the temperature measuring probe, according to claim 1, **characterized by** comprising a PCB control board (7) positioned in the mounting chamber (11) and a second thermal sensor (9) configured for measuring an environment temperature, wherein the head end (15) of the needle tube (1) is configured to be placed inside an object to be measured and conduct heat; the first thermal sensor (4) is configured to measure a temperature of the head end (15) of the needle tube (1); and the first thermal sensor (4) and the second thermal sensor (9) are both electrically connected to the PCB control board (7); a pin (91) is connected between the second thermal sensor (9) and the PCB control board (7); the antenna (3) has an accommodating space for accommodating the second thermal sensor (9) and the pin (91).

3. The Bluetooth temperature measuring probe with improved mounting stability of the temperature measuring probe, according to claim 2, **characterized in that**, the accommodating space includes an accommodating slot (37) for accommodating the second thermal sensor (9) and a through slot (371) configured for allow the pin (91) to pass through; the antenna (3) is formed with a first external thread (31) at a middle part thereof; the through slot (371) is configured to run through the first external thread (31); the accommodating slot (37) is recessed in the antenna (3); and the pin (91) is configured to pass through the through slot (371);
or, the accommodating space comprises the accommodating slot (37) for accommodating the second thermal sensor (9) and the through slot (371) configured for allowing the pin (9) to pass through; the antenna (3) is formed with the first external thread (31) at a middle part thereof; the pin (91) and there are two through slots (371); two through slots (371) are formed on the surface of the first external thread (31) at intervals; and two pins (91) are configured to run through the two through slots (371), respectively;
or, the accommodating space comprises a mounting slot (372) recessed in a circumferential sidewall of the antenna (3); the mounting slot (372) is configured for accommodating the second thermal sensor (9) and the pin (91); the mounting slot (372) is configured to run from one end of the antenna (3) close to the PCB control board (7) to one end of the antenna (3) away from the PCB control board (7); the antenna (3) is formed with the first external thread (31) at a middle part thereof; and the mounting slot (372) is configured to run through the first external thread (31);
or, the antenna (3) is configured to be a hollow columnar structure; and the accommodating space is formed inside the antenna (3) along a length direction thereof.

4. The Bluetooth temperature measuring probe with improved mounting stability of the temperature measuring probe, according to claim 1, **characterized in that**, the locking slot (12) is formed around an axis of the needle tube (1); the locking member (51) has a C-shaped cross section, and is configured to be compressed by the inner wall of the needle tube (1) and deformed elastically when the locking member (51) is sliding in the mounting chamber (11) along a length direction of the needle tube (1).

5. The Bluetooth temperature measuring probe with improved mounting stability of the temperature measuring probe, according to claim 1, **characterized in that**, the locking member (51) has a first sliding portion (511) close to the head end of the needle tube (1), a second sliding portion (512) close to the tail end of the needle tube (1) and a guiding portion (513) for connecting the first sliding portion (511) to the second sliding portion (512); the guiding portion (513) has a cross-sectional area gradually decreased from one end thereof close to the second sliding portion (512) to one end thereof close to the first sliding portion (511); the first sliding portion (511) has an external diameter less than an internal diameter of the mounting chamber (11); and the second sliding portion (512) has an external diameter greater than an external diameter of the mounting chamber (11).

6. The Bluetooth temperature measuring probe with improved mounting stability of the temperature measuring probe, according to claim 1, **characterized in that**, the handle (2) comprises a holding part (21) and an inserting part (22) configured to be inserted into the mounting chamber (11); the holding part (21) has an abutting surface (23) connected to the inserting part (22) and configured to abut against the tail end of the needle tube (1)when the inserting part (22) is inserted into the mounting chamber (11).

7. The Bluetooth temperature measuring probe with improved mounting stability of the temperature measuring probe, according to claim 1, **characterized in that**, an outer wall of the limiting nut (53) abuts against an inner wall of the mounting chamber (11); an injection chamber (14) is formed between the limiting nut (53) close to the tail end (16) and the tail end (16); and the inserting part (22) is configured to be inserted into the injection chamber (14).

8. The Bluetooth temperature measuring probe with improved mounting stability of the temperature measuring probe, according to claim 1, **characterized by** further comprising an elastic tab (6) and a PCB control board (7), wherein the PCB control board (7) is configured for electrically connecting the antenna (3) to the first thermal sensor (4); there are two elastic tabs provided at an upper side and a lower side of the PCB control board (7), respectively; and the two elastic tabs (6) are configured to abut against the inner wall of the needle tube (1) when being compressed.

9. The Bluetooth temperature measuring probe with improved mounting stability of the temperature measuring probe, according to claim 8, **characterized in that**, the PCB control board (7) is electrically connected with a power supply module (8); a positive electrode of the power supply module (8) is electrically connected to the antenna (3); the PCB control board (7) is electrically connected to the elastic tab (6); a negative electrode of the power supply module (8) is electrically connected to the needle tube (1) through the PCB control board (7) and the elastic tab (6) in turn; the locking nut (52) is configured to electrically connect the positive electrode of the power supply module (8) to an external power supply; and the needle tube (1) is configured to electrically connect the negative electrode of the power supply module (8) to the external power supply.

10. The Bluetooth temperature measuring probe with improved mounting stability of the temperature measuring probe, according to claim 8, **characterized in that**, a supporting nut (36) is in thread connection with one end of the antenna (3) close to the PCB control board (7); a periphery of the supporting nut (36) abuts against an inner wall of the needle tube (1); and the limiting nut (53) and the supporting nut (36) are both made of a ceramic material.

## Patentansprüche

1. Bluetooth-Temperaturmesssonde mit verbesserter Befestigungsstabilität der Temperaturmesssonde, **dadurch gekennzeichnet, dass** sie umfasst:
ein Nadelrohr (1) mit einer hohlen Montagekammer (11), wobei das Nadelrohr (1) ein Kopfende (15) und ein hinteres Ende (16) entlang seiner Längsrichtung aufweist;
einen Griff (2), der so gestaltet ist, dass er am hinteren Ende des Nadelrohrs (1) anliegt;
einen ersten thermischen Sensor (4), der zum Messen der Temperatur konfiguriert ist, wobei der erste thermische Sensor (4) in der Montagekammer (11) des Nadelrohrs (1) nahe dem Kopfende positioniert ist;
eine Antenne (3), die zum Übertragen von Signalen konfiguriert ist, wobei die Antenne (3) innerhalb des Nadelrohrs (1) angebracht und elektrisch mit dem ersten thermischen Sensor (4) verbunden ist; und
eine Verriegelungsanordnung (5), die so konfiguriert ist, dass sie den Griff (2) mit dem Nadelrohr (1) verbindet und den Griff (2) und das Nadelrohr (1) miteinander verriegelt,
wobei die Verriegelungsanordnung (5) ein Verriegelungselement (51) und eine Verriegelungsmutter (52) umfasst, wobei die Verriegelungsmutter (52) mit der Antenne (3) verbunden ist;
**dadurch gekennzeichnet, dass** die Verriegelungseinheit (5) außerdem zwei Begrenzungsmuttern (53) umfasst; die beiden Begrenzungsmuttern (53) sind mit der Antenne (3) verbunden;
das Verriegelungselement (51) ist zwischen den beiden Begrenzungsmuttern (53) begrenzt; eine Innenwand des Nadelrohrs (1) mit einem Verriegelungsschlitz (12) versehen, der zum Einrasten des Verriegelungselements (51) konfiguriert ist; und
die Verriegelungsmutter (52) wirkt mit den beiden Begrenzungsmuttern (53) zusammenwirkt, so dass der Griff (2) am hinteren Ende des Nadelrohrs (1) anliegt, so dass eine hochstabile Befestigung des Griffs erreicht werden kann.

2. Bluetooth-Temperaturmesssonde mit verbesserter Befestigungsstabilität der Temperaturmesssonde nach Anspruch 1, **dadurch gekennzeichnet, dass** sie eine in der Montagekammer (11) angeordnete PCB-Steuerplatine (7) und einen zweiten thermischen Sensor (9) umfasst, der zum Messen einer Umgebungstemperatur konfiguriert ist, wobei das Kopfende (15) des Nadelrohrs (1) so konfiguriert ist, dass es im Inneren eines zu messenden Objekts platzierbar ist und Wärme leitet; dass der erste thermische Sensor (4) so konfiguriert ist, dass er die Temperatur des Kopfendes (15) des Nadelrohrs (1) misst; und dass der erste thermische Sensor (4) und der zweite thermische Sensor (9) beide elektrisch mit der PCB-Steuerplatine (7) verbunden sind; dass ein Stift (91) zwischen dem zweiten thermischen Sensor (9) und der PCB-Steuerplatine (7) verbunden ist; dass die Antenne (3) einen Aufnahmeraum zum Aufnehmen des zweiten thermischen Sensors (9) und des Stifts (91) aufweist.

3. Bluetooth-Temperaturmesssonde mit verbesserter Befestigungsstabilität der Temperaturmesssonde nach Anspruch 2, **dadurch gekennzeichnet, dass** der Aufnahmeraum einen Aufnahmeschlitz (37) zum Aufnehmen des zweiten Wärmesensors (9) und einen Durchgangsschlitz (371) aufweist, der so konfiguriert ist, dass der Stift (91) hindurchgehen kann; dass die Antenne (3) mit einem ersten Außengewinde (31) an ihrem mittleren Teil ausgebildet ist; dass der Durchgangsschlitz (371) so konfiguriert ist, dass er durch das erste Außengewinde (31) verläuft; dass der Aufnahmeschlitz (37) in die Antenne (3) eingelassen ist; und dass der Stift (91) so konfiguriert ist, dass er durch den durchgehenden Schlitz (371) hindurchgeht;
oder dass der Aufnahmeraum den Aufnahmeschlitz (37) zur Aufnahme des zweiten Wärmesensors (9) und den Durchgangsschlitz (371), der so konfiguriert ist, dass der Stift (9) hindurchgeführt werden, umfasst; dass die Antenne (3) mit dem ersten Außengewinde (31) an ihrem mittleren Teil ausgebildet ist; dass der Stift (91) und zwei Durchgangsschlitze (371) auf der Oberfläche des ersten Außengewindes (31) beabstandet ausgebildet sind; und zwei Stifte (91) sind so konfiguriert, dass sie jeweils durch die beiden Durchgangsschlitze (371) laufen;
oder dass der Aufnahmeraum einen Montageschlitz (372) umfasst, der in eine Umfangsseitenwand der Antenne (3) eingelassen ist; dass der Montageschlitz (372) so konfiguriert ist, dass er den zweiten Wärmesensor (9) und den Stift (91) aufnimmt; dass der Montageschlitz (372) so konfiguriert ist, dass er von einem Ende der Antenne (3) nahe der PCB-Steuerplatine (7) zu einem Ende der Antenne (3) weg von der PCB-Steuerplatine (7) verläuft; dass die Antenne (3) an ihrem mittleren Teil mit dem ersten Außengewinde (31) ausgebildet ist; und dass der Montageschlitz (372) so konfiguriert ist, dass er durch das erste Außengewinde (31) passt;
oder die Antenne (3) ist so konfiguriert, dass sie eine hohle säulenförmige Struktur ist; und der Aufnahmeraum ist im Inneren der Antenne (3) entlang ihrer Längsrichtung gebildet.

4. Bluetooth-Temperaturmesssonde mit verbesserter Befestigungsstabilität der Temperaturmesssonde nach Anspruch 1, **dadurch gekennzeichnet, dass** der Verriegelungsschlitz (12) um eine Achse des Nadelrohrs (1) herum ausgebildet ist; das Verriegelungselement (51) besitzt einen C-förmigen Querschnitt und ist so konfiguriert, dass es durch die Innenwand des Nadelrohrs (1) zusammengedrückt und elastisch verformt wird, wenn das Verriegelungselement (51) in der Montagekammer (11) entlang der Längsrichtung des Nadelrohrs (1) gleitet.

5. Bluetooth-Temperaturmesssonde mit verbesserter Befestigungsstabilität der Temperaturmesssonde nach Anspruch 1, **dadurch gekennzeichnet, dass** das Verriegelungselement (51) einen ersten Gleitabschnitt (511) in der Nähe des Kopfendes des Nadelrohrs (1), einen zweiten Gleitabschnitt (512) in der Nähe des Schwanzendes des Nadelrohrs (1) und einen Führungsabschnitt (513) zum Verbinden des ersten Gleitabschnitts (511) mit dem zweiten Gleitabschnitt (512) hat; der Führungsabschnitt (513) weist eine Querschnittsfläche auf, die von seinem Ende in der Nähe des zweiten Gleitabschnitts (512) zu seinem Ende in der Nähe des ersten Gleitabschnitts (511) allmählich abnimmt; der erste Gleitabschnitt (511) hat einen Außendurchmesser, der kleiner ist als der Innendurchmesser der Montagekammer (11); und der zweite Gleitabschnitt (512) hat einen Außendurchmesser, der größer ist als der Außendurchmesser der Montagekammer (11).

6. Bluetooth-Temperaturmesssonde mit verbesserter Befestigungsstabilität der Temperaturmesssonde nach Anspruch 1, **dadurch gekennzeichnet, dass** der Griff (2) ein Halteteil (21) und ein Einsteckteil (22) umfasst, das zum Einstecken in die Montagekammer (11) ausgebildet ist; dass das Halteteil (21) eine mit dem Einsteckteil (22) verbundene Anschlagfläche (23) aufweist, die so ausgebildet ist, dass sie am hinteren Ende des Nadelrohrs (1) anliegt, wenn das Einsteckteil (22) in die Montagekammer (11) eingesteckt ist.

7. Bluetooth-Temperaturmesssonde mit verbesserter Befestigungsstabilität der Temperaturmesssonde nach Anspruch 1, **dadurch gekennzeichnet, dass** eine Außenwand der Begrenzungsmutter (53) an einer Innenwand der Montagekammer (11) anliegt; dass zwischen der Begrenzungsmutter (53) nahe dem Schwanzende (16) und dem Schwanzende (16) eine Injektionskammer (14) gebildet ist; und dass das Einführteil (22) zum Einführen in die Injektionskammer (14) ausgebildet ist.

8. Bluetooth-Temperaturmesssonde mit verbesserter Befestigungsstabilität der Temperaturmesssonde nach Anspruch 1, **dadurch gekennzeichnet, dass** sie ferner eine elastische Lasche (6) und eine PCB-Steuerplatine (7) umfasst, wobei die PCB-Steuerplatine (7) so konfiguriert ist, dass sie die Antenne (3) elektrisch mit dem ersten Wärmesensor (4) verbindet; dass zwei elastische Laschen an einer Oberseite bzw. einer Unterseite der PCB-Steuerplatine (7) vorgesehen sind; und dass die beiden elastischen Laschen (6) so konfiguriert sind, dass sie an der Innenwand des Nadelrohrs (1) anliegen, wenn sie komprimiert werden.

9. Bluetooth-Temperaturmesssonde mit verbesserter Befestigungsstabilität der Temperaturmesssonde nach Anspruch 8, **dadurch gekennzeichnet, dass** die PCB-Steuerplatine (7) elektrisch mit einem Stromversorgungsmodul (8) verbunden ist; dass eine positive Elektrode des Stromversorgungsmoduls (8) elektrisch mit der Antenne (3) verbunden ist; dass die PCB-Steuerplatine (7) elektrisch mit der elastischen Lasche (6) verbunden ist; dass eine negative Elektrode des Stromversorgungsmoduls (8) elektrisch mit dem Nadelrohr (1) durch die PCB-Steuerplatine (7) und die elastische Lasche (6) verbunden ist; dass die Sicherungsmutter (52) so konfiguriert ist, dass sie die positive Elektrode des Stromversorgungsmoduls (8) elektrisch mit einer externen Stromversorgung verbindet; und dass das Nadelrohr (1) so konfiguriert ist, dass es die negative Elektrode des Stromversorgungsmoduls (8) elektrisch mit der externen Stromversorgung verbindet.

10. Bluetooth-Temperaturmesssonde mit verbesserter Befestigungsstabilität der Temperaturmesssonde nach Anspruch 8, **dadurch gekennzeichnet, dass** eine Haltemutter (36) mit einem Ende der Antenne (3) in der Nähe der PCB-Steuerplatine (7) verschraubt ist; wobei ein Umfang der Haltemutter (36) an einer Innenwand des Nadelrohrs (1) anliegt; und dass die Begrenzungsmutter (53) und die Haltemutter (36) beide aus einem keramischen Material bestehen.

## Revendications

1. Sonde de mesure de température Bluetooth avec une stabilité de montage améliorée de la sonde de mesure de température, **caractérisée en ce qu'**elle comprend :
un tube d'aiguille (1) ayant une chambre de montage (11) creuse, **en ce que** le tube d'aiguille (1) a une extrémité de tête (15) et une extrémité de queue (16) le long du sens de sa longueur ;
une poignée (2) conçue pour venir en butée contre l'extrémité de queue du tube d'aiguille (1) ;
un premier capteur thermique (4) conçu pour mesurer la température, **en ce que** le premier capteur thermique (4) est positionné dans la chambre de montage (11) du tube d'aiguille (1) proche de l'extrémité de tête ;
une antenne (3) conçue pour transmettre des signaux, **en ce que** l'antenne (3) est montée à l'intérieur du tube d'aiguille (1) et électriquement connectée au premier capteur thermique (4) ; et
un ensemble de verrouillage (5) conçu pour connecter la poignée (2) au tube d'aiguille (1), et verrouiller la poignée (2) et le tube d'aiguille (1) l'un par rapport à l'autre,
**en ce que** l'ensemble de verrouillage (5) comprend un élément de verrouillage (51) et un écrou de verrouillage (52), **en ce que** l'écrou de verrouillage (52) est connecté à l'antenne (3) ;
**caractérisée en ce que** l'ensemble de verrouillage (5) comprend en outre deux écrous de limitation (53) ; les deux écrous de limitation (53) sont connectés à l'antenne (3) ; l'élément de verrouillage (51) est limité entre les deux écrous de limitation (53) ; une paroi intérieure du tube d'aiguille (1) est définie par une fente de verrouillage (12) conçue pour l'enfichage de l'élément de verrouillage (51) ; et l'écrou de verrouillage (52) coopère avec les deux écrous de limitation (53), de sorte que la poignée (2) vient en butée contre l'extrémité de queue du tube d'aiguille (1), ce qui permet de réaliser un montage de haute stabilité de la poignée.

2. Sonde de mesure de température Bluetooth avec une stabilité de montage améliorée de la sonde de mesure de température selon la revendication 1, **caractérisée en ce qu'**elle comprend une carte de commande de circuits imprimés PCB (7) positionnée dans la chambre de montage (11) et un deuxième capteur thermique (9) conçu pour mesurer une température ambiante, **en ce que** l'extrémité de tête (15) du tube d'aiguille (1) est conçue pour être placée à l'intérieur d'un objet à mesurer et conduire de la chaleur ; le premier capteur thermique (4) est conçu pour mesurer une température de l'extrémité de tête (15) du tube d'aiguille (1) ; et le premier capteur thermique (4) et le deuxième capteur thermique (9) sont tous deux électriquement connectés à la carte de commande de circuits imprimés PCB (7) ; une broche (91) est connectée entre le deuxième capteur thermique (9) et la carte de commande de circuits imprimés PCB (7) ; l'antenne (3) a un espace de logement pour loger le deuxième capteur thermique (9) et la broche (91).

3. Sonde de mesure de température Bluetooth avec une stabilité de montage améliorée de la sonde de mesure de température selon la revendication 2, **caractérisée en ce que** l'espace de logement comporte une fente de logement (37) pour loger le deuxième capteur thermique (9) et une fente traversante (371) conçue pour permettre le passage de la broche (91) ; l'antenne (3) est formée avec un premier filetage externe (31) au niveau de sa partie centrale; la fente traversante (371) est conçue pour passer par le premier filetage externe (31) ; la fente de logement (37) est encastrée dans l'antenne (3) ; et la broche (91) est conçue pour traverser la fente traversante (371) ;
ou, l'espace de logement comprend la fente de logement (37) pour loger le deuxième capteur thermique (9) et la fente traversante (371) conçue pour permettre le passage de la broche (9); l'antenne (3) est formée avec le premier filetage externe (31) au niveau de sa partie centrale ; la broche (91) et il y a deux fentes traversantes (371); deux fentes traversantes (371) sont formées sur la surface du premier filetage externe (31) à intervalles réguliers ; et deux broches (91) sont conçues pour passer respectivement par les deux fentes traversantes (371) ;
ou, l'espace de logement comprend une fente de montage (372) encastrée dans une paroi latérale circonférentielle de l'antenne (3) ; la fente de montage (372) est conçue pour loger le deuxième capteur thermique (9) et la broche (91) ; la fente de montage (372) est conçue pour aller d'une extrémité de l'antenne (3) proche de la carte de commande de circuits imprimés PCB (7) à une extrémité de l'antenne (3) éloignée de la carte de commande de circuits imprimés PCB (7) ; l'antenne (3) est formée avec le premier filetage externe (31) au niveau de sa partie centrale ; et la fente de montage (372) est conçue pour passer par le premier filetage externe (31) ;
ou, l'antenne (3) est conçue pour être une structure colonnaire creuse ; et l'espace de logement est formé à l'intérieur de l'antenne (3) le long du sens de sa longueur.

4. Sonde de mesure de température Bluetooth avec une stabilité de montage améliorée de la sonde de mesure de température selon la revendication 1, **caractérisée en ce que** la fente de verrouillage (12) est formée autour d'un axe du tube d'aiguille (1) ; l'élément de verrouillage (51) a une section transversale en forme de C, et est conçu pour être comprimé par la paroi interne du tube d'aiguille (1) et déformé élastiquement lorsque l'élément de verrouillage (51) coulisse dans la chambre de montage (11) le long du sens de la longueur du tube d'aiguille (1).

5. Sonde de mesure de température Bluetooth avec une stabilité de montage améliorée de la sonde de mesure de température selon la revendication 1, **caractérisée en ce que** l'élément de verrouillage (51) a une première partie coulissante (511) proche de l'extrémité de tête du tube d'aiguille (1), une deuxième partie coulissante (512) proche de l'extrémité de queue du tube d'aiguille (1) et une partie de guidage (513) pour raccorder la première partie coulissante (511) à la deuxième partie coulissante (512) ; la partie de guidage (513) a une surface de section transversale diminuant progressivement d'une extrémité de celle-ci proche de la deuxième partie coulissante (512) à une extrémité de celle-ci proche de la première partie coulissante (511); la première partie coulissante (511) a un diamètre externe inférieur à un diamètre interne de la chambre de montage (11) ; et la deuxième partie coulissante (512) a un diamètre externe supérieur à un diamètre externe de la chambre de montage (11).

6. Sonde de mesure de température Bluetooth avec une stabilité de montage améliorée de la sonde de mesure de température selon la revendication 1, **caractérisée en ce que** la poignée (2) comprend une partie de maintien (21) et une partie d'introduction (22) conçue pour être introduite dans la chambre de montage (11); la partie de maintien (21) a une surface d'about (23) reliée à la partie d'introduction (22) et conçue pour venir en butée contre l'extrémité de queue du tube d'aiguille (1) lorsque la partie d'introduction (22) est introduite dans la chambre de montage (11).

7. Sonde de mesure de température Bluetooth avec une stabilité de montage améliorée de la sonde de mesure de température selon la revendication 1, **caractérisée en ce qu'**une paroi extérieure de l'écrou de limitation (53) vient en butée contre une paroi intérieure de la chambre de montage (11) ; une chambre d'injection (14) est formée entre l'écrou de limitation (53) proche de l'extrémité de queue (16) et l'extrémité de queue (16) ; et la partie d'introduction (22) est conçue pour être introduite dans la chambre d'injection (14).

8. Sonde de mesure de température Bluetooth avec une stabilité de montage améliorée de la sonde de mesure de température selon la revendication 1, **caractérisée en ce qu'**elle comprend en outre une languette élastique (6) et une carte de commande de circuits imprimés PCB (7), **en ce que** la carte de commande de circuit imprimés PCB (7) est conçue pour connecter électriquement l'antenne (3) au premier capteur thermique (4) ; il y a deux languettes élastiques placées respectivement sur un côté supérieur et un côté inférieur de la carte de commande de circuits imprimés PCB (7) ; et les deux languettes élastiques (6) sont conçues pour venir en butée contre la paroi intérieure du tube d'aiguille (1) lorsqu'elles sont comprimées.

9. Sonde de mesure de température Bluetooth avec une stabilité de montage améliorée de la sonde de mesure de température selon la revendication 8, **caractérisée en ce que** la carte de commande de circuits imprimés PCB (7) est connectée électriquement à un module d'alimentation électrique (8) ; une électrode positive du module d'alimentation électrique (8) est connectée électriquement à l'antenne (3) ; la carte de commande de circuits imprimés PCB (7) est connectée électriquement à la languette élastique (6) ; une électrode négative du module d'alimentation électrique (8) est connectée électriquement au tube d'aiguille (1) par l'intermédiaire de la carte de commande de circuits imprimés (7) et la languette élastique (6) alternativement ; l'écrou de verrouillage (52) est conçu pour connecter électriquement l'électrode positive du module d'alimentation électrique (8) à une alimentation électrique externe ; et le tube d'aiguille (1) est conçu pour connecter électriquement l'électrode négative du module d'alimentation électrique (8) à l'alimentation électrique externe.

10. Sonde de mesure de température Bluetooth avec une stabilité de montage améliorée de la sonde de mesure de température selon la revendication 8, **caractérisée en ce qu'**un écrou de support (36) est relié par filetage à une extrémité de l'antenne (3) proche de la carte de commande de circuits imprimés PCB (7) ; une périphérie de l'écrou de support (36) vient en butée contre une paroi intérieure du tube d'aiguille (1) ; et l'écrou de limitation (53) et l'écrou de support (36) sont tous deux en matériau céramique.
